# EUROPÄISCHE PATENTSCHRIFT

(11) **EP 4 141 264 B1**
(45) Veröffentlichungstag und Bekanntmachung des Hinweises auf die Patenterteilung: **28.08.2024**
(21) Anmeldenummer: 22190708.2
(22) Anmeldetag: 17.08.2022
(51) Int. Cl.: F15B 15/19, B60R 21/38, B60R 22/195, F15B 15/14

(54) **PYROTECHNISCHER AKTUATOR SOWIE VERFAHREN ZUR HERSTELLUNG SEINER KOLBENSTANGE**
PYROTECHNIC ACTUATOR AND METHOD OF MANUFACTURING ITS PISTON ROD
ACTIONNEUR PYROTECHNIQUE, AINSI QUE PROCÉDÉ DE FABRICATION DE SA TIGE DE PISTON

(30) Priorität: 27.08.2021 AT 506912021
(43) Veröffentlichungstag der Anmeldung: 01.03.2023
(73) Patentinhaber: Astotec Automotive GmbH, 2552 Hirtenberg (AT)
(72) Erfinder: Marker, Ludwig, 2560 Grillenberg (AT); Kreuz, Peter, 2440 Moosbrunn (AT); Grafinger, Silvia, 2752 Wöllersdorf (AT); Ilincic, Sladan, 1230 Wien (AT)
(74) Vertreter: Müllner, Martin

(56) Entgegenhaltungen:
- EP-A1- 2 583 870
- DE-A1- 102016 219 474

## Beschreibung

### Technisches Gebiet

Die vorliegende Erfindung betrifft einen pyrotechnischen Aktuator, insbesondere zum Anstellen von Motorhauben, mit einem im wesentlichen zylindrischen Gehäuse, in dem eine Kolbenstange verschiebbar geführt ist, wobei das Gehäuse einen ersten Endbereich und einen zweiten Endbereich aufweist, wobei im ersten Endbereich eine pyrotechnische Zündeinheit vorgesehen ist und im zweiten Endbereich eine Öffnung für die Kolbenstange vorgesehen ist; wobei weiters die Kolbenstange einen zündernahen Endbereich und einen zünderfernen Endbereich hat, wobei der zünderferne Endbereich durch die Öffnung im zweiten Endbereich des Gehäuses ragt; wobei der Innendurchmesser des Gehäuses zwischen dessen beiden Endbereichen größer ist als der Außendurchmesser der Kolbenstange zwischen deren Endbereichen; wobei die Kolbenstange im zündernahen Endbereich eine Aufweitung aufweist; und wobei die Kolbenstange rohrförmig ist, wobei zumindest eines ihrer Enden verschlossen ist. Sie betrifft weiters ein Verfahren zur Herstellung der Kolbenstange für den pyrotechnischen Aktuator.

### Stand der Technik

Pyrotechnische Sicherheitssysteme gehören zu den weit verbreiteten Komponenten der passiven Fahrzeugsicherheit, d.h. jenen Bauteilen, die die Folgen eines Unfalls mindern. Neben Airbags und Gurtstraffern werden pyrotechnische Aktuatoren verwendet, um in kurzer Zeit hohe Kräfte zu mobilisieren und so mechanische Systeme anzutreiben. Pyrotechnische Aktuatoren kommen beispielsweise bei einem Unfall mit Radfahrern oder Fußgängern zwecks Anhebung der Motorhaube zum Einsatz, um zwischen Motorhaube und den harten Komponenten im Motorraum zusätzlichen Deformationsraum zu schaffen, wodurch die Schwere der Verletzungen beim Aufprall des Kopfes dieser leicht verletzlichen Verkehrsteilnehmer reduziert wird. Aktuatoren für diese Anwendungen sind schon lange bekannt, beispielsweise beschreibt die AT 407978B von Hirtenberger einen derartigen Aktuator. Neben der Funktion muss solch ein Aktuator auch die Anforderungen hinsichtlich der Handhabungssicherheit erfüllen, welche die bestimmungsgemäße Auslösung ohne Gegenkraft und einen Bonfire-Test umfassen. Hierfür muss konstruktiv Vorsorge getroffen werden, wie in der EP 2699455 B von Autoliv im Unteranspruch 6 dargestellt. In der handelsüblichen Variante wird dies durch eine Auszackung des Kolbens erreicht, wodurch der Herstellungsaufwand steigt. Gleichzeitig ist die zusätzliche Integration eines Dichtmittels am Außendurchmesser des Kolbens ebenfalls nur mit erhöhtem Aufwand möglich.

Ein pyrotechnischer Aktuator der eingangs genannten Art ist aus EP 2583870 A bekannt. Gemäß dieser Schrift hat die Kolbenstange am zünderseitigen Ende eine Aufweitung. Auf der dem Zünder abgewandten Seite befindet sich ein Dichtungsträger mit einem eingelegten O-Ring, wobei der Durchmesser der Kolbenstange im Bereich des Dichtungsträgers geringfügig reduziert ist, sodass der Dichtungsträger gegen axiale Verschiebung fixiert ist. Wenn die Kolbenstange ausgefahren wird, bewegt sich der Dichtungsträger samt O-Ring mit der Kolbenstange mit, bis der Dichtungsträger an einem Anschlag des Gehäuses anschlägt. Danach kann sich die Kolbenstange noch ein Stück weiter bewegen, während sich die Aufweitung unter plastischer Verformung auf den Innendurchmesser des Dichtungsträgers reduziert. Dadurch wird die Bewegung der Kolbenstange dosiert abgebremst. Nachteilig an dieser Lösung ist der zusätzliche Aufwand für den Dichtungsträger.

Eine ähnliche Lösung ist aus DE 102016219474 A1 bekannt, wobei aber kein Dichtungsträger vorgesehen ist, sondern der O-Ring direkt zwischen zwei Aufweitungen der Kolbenstange eingelegt ist.

### Kurzbeschreibung der Erfindung

Es ist Aufgabe der vorliegenden Erfindung, einen Aktuator der eingangs genannten Art zu schaffen, der einfacher und kostengünstiger herstellbar ist.

Diese Aufgabe wird durch einen Aktuator der eingangs genannten Art erfindungsgemäß dadurch gelöst, dass die Kolbenstange auf der der Zündeinheit abgewandten Seite der Aufweitung eine Falte aufweist, die im Wesentlichen zwei parallele Flächen hat und deren Außendurchmesser etwa dem Innendurchmesser des Gehäuses zwischen dessen beiden Endbereichen entspricht, und dass zwischen der Falte und der Aufweitung ein Dichtmittel, beispielsweise ein O-Ring, angeordnet ist. Überraschenderweise besitzt ein derartiger Kolben sehr gute Eigenschaften bei unbelasteter Auslösung und Außenbrandtests. Die Falte bildet eine Hubbegrenzung für das Ausfahren des Kolbens, wobei sie aber ausreichend nachgiebig ist, dass die Kolbenstange sanft abgebremst wird, ohne dass das Gehäuse beschädigt wird, sodass keine Gefahr besteht, dass die Kolbenstange aus dem Gehäuse geschleudert wird. Der positive Effekt dürfte in der hohen Festigkeit der Falte bei gleichzeitiger Ausziehbarkeit liegen. Zusätzlicher Aufwand zum Fixieren des Dichtmittels (beispielsweise mittels Nieten) bzw. der zusätzliche Aufwand für einen Dichtungsträger wird vermieden, da auf der dem Zünder abgewandten Seite der Aufweitung die Falte vorgesehen ist, wobei zwischen der Falte und der Aufweitung das Dichtmittel, beispielsweise ein O-Ring, angeordnet ist. Mit anderen Worten schließt sich hinter der Falte in Richtung des Zünders gesehen ein weiterer, vorzugsweise zylindrischer Bereich an, in welchem ein Dichtmittel, beispielsweise ein O-Ring, platziert werden kann. Die Falte dient als Anschlag für das Dichtmittel bei Druckbelastung durch den Gasgenerator. Damit der Kolben im Gehäuse ohne weitere Maßnahmen verschieblich ist, ist eine zusätzliche Aufweitung des zünderseitigen Endes des Kolbens vorgesehen. Diese kann durch normales Rohrumformen hergestellt werden und fixiert das Dichtmittel (den O-Ring) in axialer Richtung.

Der zuvor genannte Effekt (Hubbegrenzung und Abbremsung) ist besonders ausgeprägt, wenn die Wandstärke des Gehäuses des Aktuators größer als die Wandstärke der Kolbenstange ist, eine Wandstärke des Gehäuses von 1 mm in Kombination mit einer Wandstärke der Kolbenstange im Bereich von 0,8 mm ist eine sehr günstige Kombination. Es ist dabei immer die Wandstärke zwischen den Endbereichen gemeint, d.h. dort, wo das Gehäuse bzw. die Kolbenstange zylindrisch ist. Durch Umformungen in den Endbereichen kann die Wandstärke dort abweichen.

Besonders bewährt hat sich eine Aufweitung von ca. 40%, d.h. bei einem zylindrischen äußeren Kolbenstangendurchmesser von 10 mm ist die Aufweitung bis zu einem Außendurchmesser von 14 mm im aufgeweiteten Bereich vorteilhaft.

In einer bevorzugten Ausführung ist vorgesehen, dass die Falte zumindest 10% des Außendurchmessers der Kolbenstange zwischen deren Endbereichen vom zündernahen Ende entfernt ist. Auf diese Weise steht genug Platz für das Dichtmittel zur Verfügung.

Ein besonderer Vorteil des erfindungsgemäßen Aktuators liegt in der einfachen Herstellbarkeit der Kolbenstange. Diese Herstellung kann nämlich dadurch erfolgen, dass man zunächst einen Vorformling herstellt, wonach man die Falte durch Knickbauchen und die Aufweitung durch Rohrumformung herstellt. Die Falte (die Aufwulstung) kann also durch aufweitendes Knickbauchen erzeugt werden, was eine sehr einfache Materialumformung ist.

Als Ausgangsmaterial dient ein Rohr, oder besonders bevorzugt ein rohrförmiger Tiefziehteil mit Boden. Ist der Vorformling ein beidseitig offenes Rohr, muss ein offenes Ende davon (vorzugsweise das der Falte abgewandte Ende) gasdicht verschlossen werden.

Wenn die Auftrefffläche der Kolbenstange größer als der Durchmesser der Kolbenstange zwischen deren Endbereichen sein soll, ist nach einer Ausgestaltung der Erfindung vorgesehen, dass das gasdichte Verschließen an dem zünderfernen Ende durch Verbinden mit einem Metallelement erfolgt, nachdem die Kolbenstange in das Gehäuse eingesetzt wurde. Die Fixierung kann durch alle bekannten mechanischen Verbindungen (Rollieren, Vercrimpen, Anwürgen oder Schweißen...) erfolgen, aber auch durch Verschweißen. Zur Verschweißung sind insbesondere Laser- und Kondensatorentladungsvefahren geeignet.

Ist der Durchmesser der Kolbenstange an ihrem zünderfernen Ende in verbautem Zustand gleich oder kleiner als der zylindrische Bereich des Kolbens, erfolgt der Verschluss des Vorformlings bevorzugt, bevor er in das Gehäuse eingesetzt wird. Dies kann wie oben beschrieben mittels eines Kolbenverschlusses erfolgen, es kann aber auch ohne Zusatzelement durch eine Querschnittsverringerung durch Einziehen, Taumeln, Rollieren oder ähnliches erfolgen. Um in diesem Fall die Dichtheit zu erhöhen, kann das umgeformte Ende zusätzlich verschweißt werden, beispielsweise mittels Laserschweißverfahren.

### Kurze Beschreibung der Zeichnungsfiguren

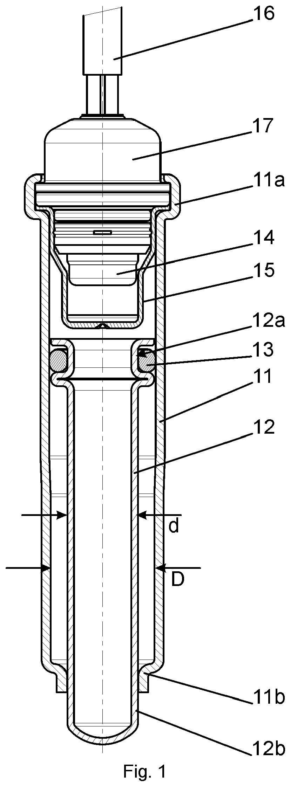

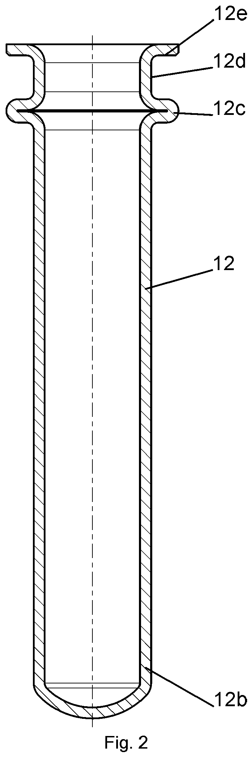

An Hand der beiliegenden Zeichnungen wird die vorliegende Erfindung näher erläutert. Es zeigt: Fig. 1 einen erfindungsgemäßen Aktuator im Schnitt; und Fig. 2 die Kolbenstange des Aktuators von Fig. 1 in vergrößertem Maßstab.

### Beschreibung der Ausführungsarten

Der pyrotechnische Aktuator weist ein Gehäuse 11 auf, welches einen ersten Endbereich 11a und einen zweiten Endbereich 11b hat. Im Endbereich 11a ist eine Zündeinheit 17 mit Zünder 14 und Anschlusskabel 16 vorgesehen. Der Zünder 14 kann eine Treibladung zünden, die sich in einem Treibladungsgehäuse 15 befindet. Im zweiten Endbereich 11b befindet sich eine Öffnung für eine Kolbenstange 12. Zwischen den Endbereichen 11a, 11b ist das Gehäuse 11 im Wesentlichen zylindrisch. Es hat dort einen Innendurchmesser D.

Die Kolbenstange 12 hat einen zündernahen Endbereich 12a und einen zünderfernen Endbereich 12b. Der zünderferne Endbereich 12b ragt durch die Öffnung im Endbereich 11b des Gehäuses 11. Zwischen dem zündernahen und dem zünderfernen Endbereich 12a bzw. 12b ist die Kolbenstange rohrförmig mit einem Außendurchmesser d.

Die genaue Form der Kolbenstange 12 ist aus Fig. 2 ersichtlich. Das zünderferne Ende 12b ist verschlossen, in diesem Fall dadurch, dass die Kolbenstange 12 durch Tiefziehen hergestellt wurde, sodass der Boden einstückig mit der Rohrwand ist. Das zündernahe Ende 12a (siehe Fig. 1) weist eine Falte 12c (siehe Fig. 2) auf, die durch Knickbauchen hergestellt wurde. Diese Falte 12c befindet sich in einem Abstand zum zündernahen Ende der Kolbenstange 12, sodass sich zünderseitig von der Falte 12c ein zylindrischer Bereich 12d ergibt. Am zünderseitigen Ende weist die Kolbenstange 12 eine Aufweitung 12e auf, die durch einfache Rohrumformung hergestellt wurde.

Der zylindrische Bereich 12d dient zur Aufnahme eines O-Rings 13 (siehe Fig. 1).

Das Verhältnis D:d beträgt etwa 1,4:1. Im Bereich der Falte 12c und der Aufweitung 12e ist der Durchmesser der Kolbenstange 12 D oder geringfügig kleiner. Der Durchmesser der Öffnung im zweiten Endbereich 11b des Gehäuses 11 beträgt d oder geringfügig mehr.

### Der Aktuator funktioniert wie folgt:

Wenn über das Anschlusskabel 16 ein Zündimpuls kommt, zündet zunächst der Zünder 14 und danach die Treibladung im Treibladungsgehäuse 15. Dadurch entsteht schlagartig ein hoher Druck, der dazu führt, dass die Kolbenstange 12 ausfährt, und wenn es keinen äußeren Widerstand gibt, geschieht dies ungebremst, bis die Falte 12c (siehe Fig. 2) an der Öffnung im zweiten Endbereich 11b (siehe Fig. 1) des Gehäuses 11 anschlägt. Durch die Wucht des Aufpralls biegt sich die Falte 12c (siehe Fig. 2) etwas auf, wodurch die kinetische Energie der Kolbenstange 12 in Verformungsarbeit umgewandelt wird. Bei richtiger Wahl der Abmessungen (z.B. Wandstärke der Kolbenstange 0,8 mm, Verhältnis D:d=1,4) ist die kinetische Energie aufgebraucht, bevor die Falte 12c vollkommen flachgebogen ist oder der zünderferne Endbereich 11b des Gehäuses 11 versagt, sodass die Kolbenstange 12 im Gehäuse 11 stecken bleibt. Dabei ist auch eine ausreichende Wandstärke des Gehäuses 11 wichtig (z.B. 1 mm), damit sich die Öffnung im Endbereich 11b nicht aufweitet.

## Patentansprüche

1. Pyrotechnischer Aktuator, insbesondere zum Anstellen von Motorhauben, mit einem im wesentlichen zylindrischen Gehäuse (11), in dem eine Kolbenstange (12) verschiebbar geführt ist, wobei das Gehäuse (11) einen ersten Endbereich (11a) und einen zweiten Endbereich (11b) aufweist, wobei im ersten Endbereich (11a) eine pyrotechnische Zündeinheit (17) vorgesehen ist und im zweiten Endbereich (11b) eine Öffnung für die Kolbenstange (12) vorgesehen ist; wobei weiters die Kolbenstange (12) einen zündernahen Endbereich (12a) und einen zünderfernen Endbereich (12b) hat, wobei der zünderferne Endbereich (12b) durch die Öffnung im zweiten Endbereich (11b) des Gehäuses (11) ragt; wobei der Innendurchmesser (D) des Gehäuses zwischen dessen beiden Endbereichen (11a, 11b) größer ist als der Außendurchmesser (d) der Kolbenstange (12) zwischen deren Endbereichen (12a, 12b); wobei die Kolbenstange im zündernahen Endbereich (12a) eine Aufweitung (12e) aufweist; und wobei die Kolbenstange (12) rohrförmig ist, wobei zumindest eines ihrer Enden verschlossen ist, **dadurch gekennzeichnet, dass** die Kolbenstange (12) auf der der Zündeinheit (17) abgewandten Seite der Aufweitung (12e) eine Falte (12c) aufweist, die im Wesentlichen zwei parallele Flächen hat und deren Außendurchmesser etwa dem Innendurchmesser (D) des Gehäuses (11) zwischen dessen beiden Endbereichen (11a, 11b) entspricht, und dass zwischen der Falte (12c) und der Aufweitung (12e) ein Dichtmittel, beispielsweise ein O-Ring (13), angeordnet ist.

2. Pyrotechnischer Aktuator nach Anspruch 1, **dadurch gekennzeichnet, dass** die Wandstärke der Kolbenstange (12) zwischen deren Endbereichen (12a, 12b) maximal so groß wie die Wandstärke des Gehäuses (11) zwischen dessen Endbereichen (11a, 11b) ist.

3. Pyrotechnischer Aktuator nach Anspruch 2, **dadurch gekennzeichnet, dass** die Wandstärke der Kolbenstange (12) zwischen deren Endbereichen (12a, 12b) etwa 80% der Wandstärke des Gehäuses (11) zwischen dessen Endbereichen (11a, 11b) beträgt.

4. Pyrotechnischer Aktuator nach einem der Ansprüche 1 bis 3, **dadurch gekennzeichnet, dass** der Außendurchmesser der Falte (12c) um zumindest 20%, vorzugsweise um etwa 40%, größer ist als der Außendurchmesser (d) der Kolbenstange (12) zwischen deren Endbereichen (12a, 12b).

5. Pyrotechnischer Aktuator nach einem der Ansprüche 1 bis 4, **dadurch gekennzeichnet, dass** die Falte (12c) zumindest 10% des Außendurchmessers (d) der Kolbenstange (12) zwischen deren Endbereichen (12a, 12b) vom zündernahen Ende entfernt ist.

6. Verfahren zur Herstellung der Kolbenstange (12) für den pyrotechnischen Aktuator nach einem der Ansprüche 1 bis 5, **dadurch gekennzeichnet, dass** man zunächst einen Vorformling herstellt, wonach man die Falte (12c) durch Knickbauchen und die Aufweitung (12e) durch Rohrumformung herstellt.

7. Verfahren nach Anspruch 6, **dadurch gekennzeichnet, dass** man den Vorformling durch Tiefziehen als rohrförmiges Element mit Boden herstellt.

8. Verfahren nach Anspruch 6, **dadurch gekennzeichnet, dass** man einen rohrförmigen Vorformling herstellt und den Vorformling vor oder nach dem Knickbauchen an einem Ende gasdicht verschließt.

9. Verfahren nach Anspruch 8, **dadurch gekennzeichnet, dass** das gasdichte Verschließen an dem zünderfernen Ende durch Verbinden mit einem Metallelement erfolgt, nachdem die Kolbenstange (12) in das Gehäuse (11) eingesetzt wurde.

10. Verfahren nach Anspruch 9, **dadurch gekennzeichnet, dass** die Verbindung mit dem Metallelement durch Verschweißen erfolgt.

11. Verfahren nach Anspruch 9, **dadurch gekennzeichnet, dass** das Metallelement mit der Kolbenstange (12) mechanisch verbunden wird.

12. Verfahren nach Anspruch 8, **dadurch gekennzeichnet, dass** das gasdichte Verschließen ohne Zusatzelement, beispielsweise durch Einziehen, Stauchen oder Taumeln, erfolgt.

13. Verfahren nach Anspruch 12, **dadurch gekennzeichnet, dass** das Ende zusätzlich verschweißt wird.

## Claims

1. A pyrotechnic actuator, in particular for raising engine bonnets, having a substantially cylindrical housing (11) in which a piston rod (12) is displaceably guided, wherein the housing (11) includes a first end region (11a) and a second end region (11b), wherein a pyrotechnic ignition unit (17) is provided in the first end region (11a), and an opening for the piston rod (12) is provided in the second end region (11b); wherein the piston rod further (12) has an end region (12a) close to the igniter, and an end region (12b) remote from the igniter, wherein the end region (12b) remote from the igniter extends through the opening in the second end region (11b) of the housing (11); wherein the inner diameter (D) of the housing between the both end regions (11a, 11b) thereof is greater than the outer diameter (d) of the piston rod (12) between the both end regions (12a, 12b) thereof; wherein the piston rod includes an enlargement (12e) in the end region (12a) close to the igniter; and wherein the piston rod (12) is tubular, wherein at least one of the ends thereof is closed, **characterised in that** the piston rod (12) includes a fold (12c) on the side of the enlargement (12e) facing away from the ignition unit (17) which fold has substantially two parallel surfaces and the outer diameter of which corresponds approximately to the inner diameter (D) of the housing (11) between the both end regions (11a, 11b) thereof, and **in that** a sealing means, for example an O-ring (13), is arranged between the fold (12c) and the enlargement (12e).

2. The pyrotechnic actuator according to claim 1, **characterised in that** the wall thickness of the piston rod (12) between the end regions (12a, 12b) thereof is at most as large as the wall thickness of the housing (11) between the end regions (11a, 11b) thereof.

3. The pyrotechnic actuator according to claim 2, **characterised in that** the wall thickness of the piston rod (12) between the end regions (12a, 12b) thereof is approximately 80% of the wall thickness of the housing (11) between the end regions (11a, 11b) thereof.

4. The pyrotechnic actuator according to any of claims 1 to 3, **characterised in that** the outer diameter of the fold (12c) is at least 20%, preferably approximately 40%, larger than the outer diameter (d) of the piston rod (12) between the end regions (12a, 12b) thereof.

5. The pyrotechnic actuator according to any of claims 1 to 4, **characterised in that** the fold (12c) is at least 10% of the outer diameter (d) of the piston rod (12) between the end regions (12a, 12b) thereof away from the end close to the igniter.

6. A method for manufacturing the piston rod (12) for the pyrotechnic actuator according to any of claims 1 to 5, **characterised in that** first a preform is manufactured, after which the fold (12c) is manufactured by acute-angle bulging and the enlarging (12e) is manufactured by reshaping the tube.

7. The method according to claim 6, **characterised in that** the preform is manufactured by deep drawing as a tubular element having a bottom.

8. The method according to claim 6, **characterised in that** a tubular preform is manufactured, and the preform is sealed in a gas-tight manner at one end before or after acute-angle bulging.

9. The method according to claim 8, **characterised in that** the gas-tight sealing at the end remote from the igniter occurs by bonding with a metal element after the piston rod (12) has been inserted into the housing (11).

10. The method according to claim 9, **characterised in that** the bonding to the metal element is made by welding.

11. The method according to claim 9, **characterised in that** the metal element is connected to the piston rod (12) mechanically.

12. The method according to claim 8, **characterised in that** the gas-tight sealing occurs without an additional element, for example by drawing in, swaging or tumbling.

13. The method according to claim 12, **characterised in that** the end is additionally welded.

## Revendications

1. Actionneur pyrotechnique, destiné notamment à soulever des capots de voiture, comportant un boîtier (11) de forme sensiblement cylindrique dans lequel une tige de piston (12) peut se déplacer de manière guidée, le boîtier (11) comportant une première zone terminale (11a) et une seconde zone terminale (11b), la première zone terminale (11a) renfermant une unité d'allumage pyrotechnique (17) et la seconde zone terminale (11b) étant dotée d'une ouverture destinée à la tige de piston (12) ; la tige de piston (12) comportant en outre une zone terminale proche du dispositif d'allumage (12a) et une zone terminale éloignée du dispositif d'allumage (12b), la zone terminale éloignée du dispositif d'allumage (12b) s'étendant à travers l'ouverture dans la seconde zone terminale (11b) du boîtier (11) ; le diamètre intérieur (D) dudit boîtier entre les deux zones terminales (11a, 11b) étant supérieur au diamètre extérieur (d) de la tige de piston (12) entre ses zones terminales (12a, 12b) ; ladite tige de piston présentant un élargissement (12e) dans la zone terminale proche du dispositif d'allumage (12a) ; et la tige de piston (12) étant de forme tubulaire, au moins une de ses extrémités étant fermée, **caractérisé en ce que** la tige de piston (12) présente, sur le côté de l'élargissement (12e) se trouvant à opposé de l'unité d'allumage (17), un pli (12c) qui a sensiblement deux faces parallèles et dont le diamètre extérieur correspond approximativement au diamètre intérieur (D) du boîtier (11) entre ses deux zones terminales (11a, 11b), **et qu**'un moyen d'étanchéité, s'agissant par exemple d'un joint torique (13), est disposé entre le pli (12c) et l'élargissement (12e).

2. Actionneur pyrotechnique selon la revendication 1, **caractérisé en ce que** la tige de piston (12) présente, entre ses zones terminales (12a, 12b), une épaisseur de paroi qui est inférieure ou égale à l'épaisseur de paroi que le boîtier (11) présente entre ses zones terminales (11a, 11b).

3. Actionneur pyrotechnique selon la revendication 2, **caractérisé en ce que** la tige de piston (12) présente, entre ses zones terminales (12a, 12b), une épaisseur de paroi qui correspond à environ 80 % de l'épaisseur de paroi que le boîtier (11) présente entre ses zones terminales (11a, 11b).

4. Actionneur pyrotechnique selon l'une des revendications 1 à 3, **caractérisé en ce que** le diamètre extérieur du pli (12c) est supérieur d'au moins 20 %, préférentiellement d'environ 40 %, au diamètre extérieur (d) que la tige de piston (12) présente entre ses zones terminales (12a, 12b) .

5. Actionneur pyrotechnique selon l'une des revendications 1 à 4, **caractérisé en ce que** la distance entre le pli (12c) et l'extrémité proche du dispositif d'allumage correspond à au moins 10 % du diamètre extérieur (d) que la tige de piston (12) présente entre ses zones terminales (12a, 12b) .

6. Procédé de fabrication de la tige de piston (12) destinée à l'actionneur pyrotechnique selon l'une des revendications 1 à 5, **caractérisé en ce que** l'on fabrique dans un premier temps une ébauche pour ensuite réaliser le pli (12c) par cintrage par flambement, et l'élargissement (12e) par déformation du tube.

7. Procédé selon la revendication 6, **caractérisé en ce que** l'on fabrique ladite ébauche par emboutissage pour ainsi obtenir un élément tubulaire doté d'un fond.

8. Procédé selon la revendication 6, **caractérisé en ce que** l'on fabrique une ébauche et l'on ferme, avant ou après le cintrage par flambement, l'une des extrémités de ladite ébauche de manière à ce qu'elle soit étanche aux gaz.

9. Procédé selon la revendication 8, **caractérisé en ce que** la fermeture visant une étanchéité aux gaz est réalisée à l'extrémité éloignée du dispositif d'allumage au moyen d'un élément métallique après avoir introduit la tige de piston (12) dans le boîtier (11).

10. Procédé selon la revendication 9, **caractérisé en ce que** la liaison avec ledit élément métallique est réalisée par soudage.

11. Procédé selon la revendication 9, **caractérisé en ce que** ledit élément métallique est mis en liaison mécanique avec la tige de piston (12).

12. Procédé selon la revendication 8, **caractérisé en ce que** la fermeture visant l'étanchéité aux gaz est réalisée en absence d'éléments supplémentaires, en mettant en œuvre, par exemple un rétrécissement, une compression ou un tournage excentrique.

13. Procédé selon la revendication 12, **caractérisé en ce que** l'extrémité est, de manière supplémentaire, fermée par soudage.
